# EUROPÄISCHE PATENTSCHRIFT

(11) **EP 0 995 936 B1**
(45) Veröffentlichungstag und Bekanntmachung des Hinweises auf die Patenterteilung: **15.09.2004**
(21) Anmeldenummer: 99117294.1
(22) Anmeldetag: 02.09.1999
(51) Int. Cl.: F16L 3/10, F16L 3/133

(54) **Rohrschelle**
Pipe clamp
Collier de serrage

(30) Priorität: 23.10.1998 DE 29818912 U
(43) Veröffentlichungstag der Anmeldung: 26.04.2000
(73) Patentinhaber: fischerwerke Artur Fischer GmbH & Co. KG, 72178 Waldachtal (DE)
(72) Erfinder: Schulte, Helmut, 58507 Lüdenscheid (DE)

(56) Entgegenhaltungen:
- DE-A- 4 002 450
- DE-U- 8 902 336
- DE-U- 9 309 869
- FR-A- 2 631 678

## Beschreibung

Die Erfindung betrifft eine Rohrschelle mit den Merkmalen des Oberbegriffs des Anspruchs 1.

Derartige Rohrschellen dienen zum Befestigen von beispielsweise Wasserrohren an einer Wand oder Decke. Sie weisen einen ein eingelegtes Rohr umschließenden Schellenring auf Dieser kann einstückig sein und sich zum Einlegen des Rohres elastisch und/oder plastisch aufweiten lassen. Auch kann der Schellenring zwei- oder mehrstückig aus Schellenbügeln zusammengesetzt sein, die an einer Stelle des Umfangs des Schellenrings gelenkig miteinander verbunden sind. Mit Abstand von der gelenkigen Verbindungsstelle bzw. beim einstückigen Schellenring an einer Stelle des Umfangs weist der Schellenring eine Öffnung zum Einlegen des Rohres auf Beiderseits der Öffnung stehen Spannflansche nach außen vom Schellenkörper ab, die von einer Spannschraube durchsetzt sind, mit der die Spannflansche zusammenspannbar sind, so daß sich das Rohr in der Rohrschelle festspannen läßt.

Um eine einfache Handhabung der Rohrschelle zu gewährleisten, schlägt die DE 40 02 450 A1 vor, dass die Spannschraube einen gewindefreien Schaftabschnitt mit Abstand vom Kopf der Spannschraube aufweist. Einer der beiden Spannflansche, der sich auf der Seite eines Kopfes der Spannschraube befindet, weist einen einseitig offenen Schlitz und der andere Spannflansch ein Gewindeloch auf. Die Spannschraube wird bis zu seinem gewindefreien Schaftabschnitt in das Gewindeloch eingeschraubt, so dass sie gegenüber dem Spannflansch verschwenkbar ist. Hierdurch kann die Spannschraube in den offenen Schlitz des anderen Spannflansches hinein und wieder heraus geschwenkt werden. Der dem Kopf der Spannschraube zugewandte Gewindeabschnitt dient dabei als Verliersicherung. Zum Schließen der Rohrschelle wird die Spannschraube zunächst aus dem Schlitz herausgeschwenkt, dass Rohr eingelegt und dann die beiden Spannflansche zusammen gedrückt. Im weiteren wird die Spannschraube wieder in den Schlitz hinein geschwenkt und dann angezogen. Dabei greift der gewindetragende Schaftabschnitt, der dem Kopf der Spannschraube zugewandt ist, in das Gewindeloch des Spannflansches.

Das Problem einer solchen Rohrschelle besteht in der mangelnden Rückstellwirkung der Spannschraube beim Schließen der Rohrschelle. Wird die in DE 40 02 450 A1 vorgeschlagene Rohrschelle derart an der Wand befestigt, dass die Spannflansche nach unten weisen, so muss die Spannschraube zum Schließen der Rohrschelle von Hand entgegen der Schwerkraft in den offenen Schlitz des einen Spannflansches hinein geschwenkt werden. Üblicherweise wird der Monteur aber mit einer Hand das entsprechende Rohr und mit der anderen Hand einen Schraubendreher zum Verschrauben der Spannschraube halten, so dass die mangelnde Rückstellwirkung der Spannschraube zur Erschwerung der Montage führt.

Eine Spannschraube der genannten Art mit einem gewindefreien Schaftabschnitt mit Abstand vom Kopf der Spannschraube ist außerdem aus DE 93 09 869.3 bekannt. Allerdings schlägt die betreffende Druckschrift vor, diese Spannschraube als Gelenk für die Verbindung zweier Schellenbügel zu verwenden und mit einer weiteren Spannschraube mit einem durchgehenden Gewinde zu kombinieren. Auch hier ist die Montage umständlich, da zur Sicherung des Rohres die zweite Spannschraube verschraubt werden muss. Bei einer Deckenmontage muss hierzu dass Rohr gehalten werden und gleichzeitig die zweite Spannschraube in das entsprechende Gewinde gefügt und eingeschraubt werden.

Weiterhin schlägt die FR 2 631 678 eine Rohrschelle mit einer federnd verschwenkbaren Spannschraube vor. Die Spannschraube durchgreift mit ihrem dem Kopf abgewandten Ende eine Bohrung des einen Spannflansches und ist an diesem Ende durch eine Mutter gesichert. Die Bohrungen im Spannflansch ist so groß ausgeführt, dass die Spannschraube verschwenken kann. Ein Federbügel, der die Spannschraube auf beiden Seiten des Spannflansches umgreift, bewirkt, dass die Spannschraube in einer Position gehalten wird, in der das dem Kopf zugewandte Ende der Spannschraube in einen einseitig offenen Schlitz des anderen Spannflansches ragt. Federnd kann die Spannschraube aus dem Schlitz verschwenkt werden. Dies ermöglicht zwar eine einfachere Montage, da die Spannschraube beim Schließen der Rohrschelle selbsttätig in den Schlitz des Spannflansches hinein verschwenkt, erfordert jedoch einen aufwändigen Federbügel.

Der Erfindung liegt daher die Aufgabe zu Grunde, eine Rohrschelle zu schaffen, die eine einfache Handhabung insbesondere beim Schließen aufweist und gleichzeitig kostengünstig ist.

Diese Aufgabe wird erfindungsgemäß durch die Merkmale des Anspruchs 1 gelöst. Die Spannschraube der Rohrschelle weist einen Gummischlauch, einen Kunststoffschlauch, einen Gummiring, einen Kunststoffring, eine Tellerfeder oder eine insbesondere konisch gewickelte Schraubendruckfeder als Federelement auf. Das Federelement stützt sich an dem das Gewindeloch aufweisenden Spannflansch ab und hält die Spannschraube federnd in einer in etwa senkrechten Stellung zum Spannflansch. Die Spannschraube läßt sich gegen eine Federkraft des Federelements zur Seite verschwenken, so daß sie aus dem einseitig offenen Schlitz im einen Spannflansch heraus und in den Schlitz hinein verschwenkbar ist. Das Hineinverschwenken in den Schlitz erfolgt selbsttätig durch die Federkraft des Federelements. Die Erfindung hat den Vorteil, daß die Spannschraube beim Schließen der Rohrschelle selbsttätig in den einseitig offenen Schlitz im einen Spannflansch hineinverschwenkt.

Bei einer Weiterbildung der Erfindung weist der den Schlitz aufweisende Spannflansch einen Abweiser auf, der beispielsweise schräg oder geschwungen in Richtung des offenen Endes des Schlitzes und vom anderen, das Gewindeloch aufweisenden Spannflansch weg verläuft. Werden beim Schließen der Rohrschelle die beiden Spannflansche zusammengedrückt, drückt der Abweiser den Kopf der Spannschraube zur Seite in Richtung des offenen Endes des Schlitzes, die Spannschraube wird gegen die Federkraft des die Verliersicherung bildenden Federelements verschwenkt. Beim weiteren Zusammendrücken der Spannflansche überwindet der Kopf der Spannschraube den den Schlitz aufweisenden Spannflansch und die Spannschraube wird durch die Federkraft des Federelements in den Schlitz des einen Spannflansches hineinverschwenkt. Der Kopf der Spannschraube hintergreift den einen Spannflansch, die Rohrschelle ist provisorisch verschlossen und hält ein in sie eingelegtes Rohr. Diese Ausgestaltung der Erfindung hat den Vorteil, daß das provisorische Schließen der Rohrschelle automatisch durch Zusammendrücken der beiden Spannflansche erfolgt, die Spannschraube muß nicht von Hand zur Seite verschwenkt werden, um den den Schlitz aufweisenden Spannflansch zu überwinden, dies bewirkt der Abweiser. Und die Spannschraube muß nach Überwinden des einen Spannflansches nicht von Hand in den Schlitz hineinverschwenkt werden, dies bewirkt das Federelement.

Vorzugsweise ist der Schellenring der erfindungsgemäßen Rohrschelle zweistückig mit zwei gelenkig miteinander verbundenen Schellenbügeln ausgebildet. Er weist ein Befestigungselement, beispielsweise eine am Schellenring angeschweißte Mutter oder einen Gewindebolzen, zum Anbringen an einer Wand, Decke oder dgl. auf.

Die Erfindung wird nachfolgend anhand zweier in der Zeichnung dargestellter Ausführungsbeispiele näher erläutert. Es zeigen:
- Figur 1: eine erfindungsgemäße Rohrschelle in Seitenansicht; und
- Figuren 2 bis 4: eine vergrößerte Einzelheitdarstellung einer zweiten, erfindungsgemäßen Rohrschelle.

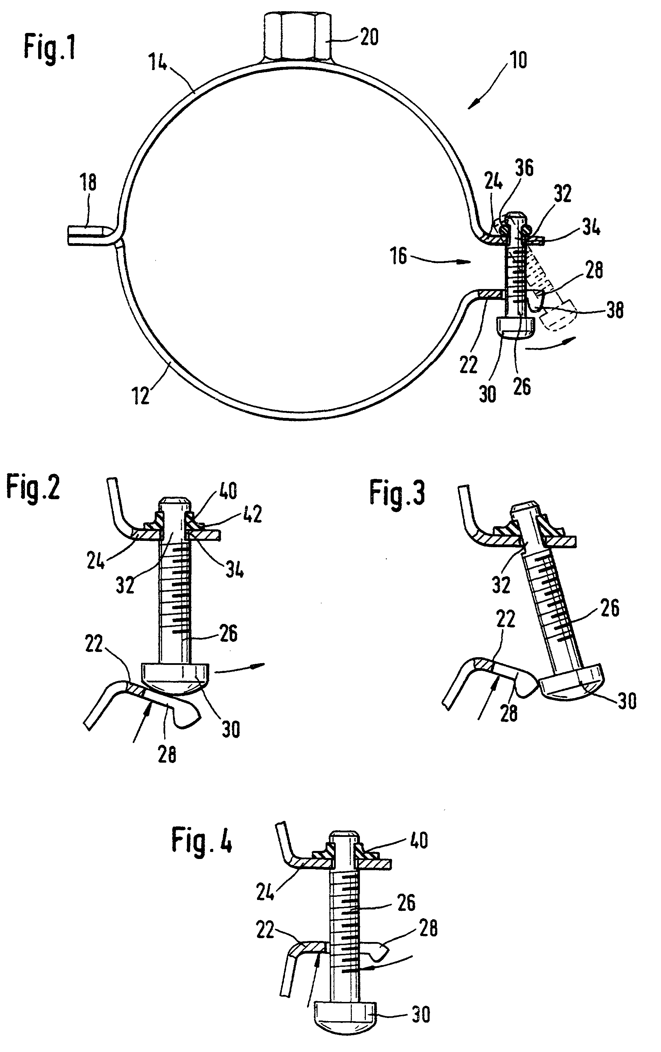

Die in Figur 1 dargestellte, erfindungsgemäße Rohrschelle 10 weist einen Schellenring mit einem ersten Schellenbügel 12 und einem zweiten Schellenbügel 14 auf, die beide jeweils etwas weniger als einen Halbkreisbogen bilden. An einer Stelle ihres Umfangs weist die Rohrschelle 10 eine Öffnung 16 zum Einlegen eines nicht dargestellten Rohres auf. Der Öffnung 16 gegenüber sind die beiden Schellenbügel 12, 14 gelenkig miteinander verbunden, um die Rohrschelle 10 öffnen und das Rohr einlegen zu können. Zur gelenkigen Verbindung weist der erste Schellenbügel 12 eine in Draufsicht T-förmige Zunge 18 auf, die in an sich bekannter Weise eine in der Zeichnung nicht sichtbare Ausstanzung des zweiten Schellenbügels 14 durchgreift.

Beide Schellenbügel 12, 14 sind Blechstanz- und Biegeteile. Etwa in der Mitte des Halbkreisbogens, den der zweite Schellenbügel 14 bildet, ist eine Mutter 20 zur Befestigung der Rohrschelle 10 an einer Decke oder einer Wand angeschweißt. Auf einer Innenseite der Rohrschelle 10 kann eine an sich bekannte, gummielastische Einlage angebracht sein, die der klaren Darstellung wegen nicht gezeichnet ist.

Beiderseits der Öffnung 16 zum Einlegen des Rohres weisen die Schellenbügel 12, 14 mit ihnen einstückige Spannflansche 22, 24 auf, die in etwa radial nach außen und näherungsweise parallel zueinander von der Rohrschelle 10 abstehen und die von einer Spannschraube 26 durchgriffen werden. Mit ihrem kopfseitigen Schaftende durchgreift die Spannschraube 26 einen Schlitz 28, der radial verlaufend und außen offen in dem einen Spannflansch 22 angebracht ist, der mit dem ersten Schellenbügel 12 einstückig ist. Ein Kopf 30 der Spannschraube 26 befindet sich auf einer dem anderen Spannflansch 24 abgewandten Seite des einen Spannflanschs 22.

Die Spannschraube 26 weist einen gewindefreien und verjüngten Schaftabschnitt 32 nahe ihrem dem Kopf 30 der Spannschraube 26 fernen Einschraubende auf. Mit dem gewindefreien Schaftabschnitt 32 ist die Spannschraube 36 in einem Gewindeloch 34 schwenkbar aufgenommen, das im anderen Spannflansch 24 angebracht ist. Das Gewindeloch 34 hat ein zum Gewinde der Spannschraube 26 komplementäres Gewinde. Ein auf einer dem einen Spannflansch 22 abgewandten Seite des anderen Spannflansches 24 in den gewindefreien Schaftabschnitt 34 der Spannschraube 26 eingelegter Gummiring 36 bildet eine Verliersicherung, der die Spannschraube 26 mit ihrem gewindefreien Schaftabschnitt 32 verliersicher im Gewindeloch 34 des anderen Spannflansches 24 hält.

Am offenen Ende des Schlitzes 28 sind einander gegenüberliegend Abweiserecken 38 am einen Spannflansch 22 umgebogen. Die Abweiserecken 38 sind vom anderen Spannflansch 24 weg gebogen, sie sind einander zugewandt und verlaufen in bezug auf die Schellenbügel 12, 14 schräg nach außen.

Zur Befestigung eines nicht dargestellten Rohres an einer Wand oder Decke wird die erfindungsgemäße Rohrschelle 10 mittels ihrer Mutter 20 an der Wand oder Decke befestigt. Die Rohrschelle 10 ist zunächst geöffnet, d.h. der Kopf 30 der Spannschraube 26 befindet sich auf einer dem anderen Spannflansch 24 zugewandten Seite des einen Spannflansches 22, die Spannschraube 26 durchgreift den mit dem einseitig offenen Schlitz 28 versehenen einen Spannflansch 22 nicht. Die Schellenbügel 12, 14 lassen sich zum Einlegen des Rohres auseinanderschwenken. Nach Einlegen des Rohres werden die beiden Schellenbügel 12, 14 zusammengedrückt. Dabei nähern sich die Spannflansche 22, 24 einander, der Kopf 30 der Spannschraube 26 stößt gegen den einen Spannflansch 22. Dieser Spannflansch 22, der infolge der gegeneinander verschwenkten Schellenbügel 12, 14 in einem sich radial nach außen öffnenden Winkel zum anderen Spannflansch 24 steht, drückt den Kopf 30 der Spannschraube 26 radial nach außen und verschwenkt dadurch die Spannschraube 26 nach außen (Strichlinien in Figur 1). Das Verschwenken der Spannschraube 26 nach außen wird von den Abweiserecken 38 des einen Spannflansches 22 unterstützt.

Sobald der Kopf 30 der Spannschraube 26 den einen Spannflansch 22 überwunden hat, kann die Spannschraube 26 in den Schlitz 28 im einen Spannflansch 22 hineinverschwenkt werden, so daß ihr Kopf 30 den einen Spannflansch 22 hintergreift. Die erfindungsgemäße Rohrschelle 10 ist dadurch provisorisch geschlossen, sie hält das in sie eingelegte Rohr. Durch Anziehen der Spannschraube 26 wird das Rohr in der Rohrschelle 10 festgespannt. Die erfindungsgemäße Rohrschelle 10 läßt sich ohne Werkzeug provisorisch schließen. Dazu werden lediglich die beiden Schellenbügel 12, 14 gegeneinander gedrückt und die Spannschraube 26 in den Schlitz 28 hineinverschwenkt.

Bei einer anderen, in Figuren 2 bis 4 in verschiedenen Stellungen dargestellten Ausgestaltung der Erfindung ist eine Gummimuffe 40 anstelle des Gummirings 36 als Verliersicherung in den gewindefreien Abschnitt 32 der Spannschraube 26 eingelegt. Die Gummimuffe 40 weist einen L-förmigen Ringquerschnitt auf, sie liegt mit einem radial abstehenden Bund 42 auf dem anderen Spannflansch 24 auf. Die Gummimuffe 40 bildet ein Federelement, das die Spannschraube 26 elastisch federnd in einer zum anderen, das Gewindeloch 34 aufweisenden Spannflansch 24 senkrechten Stellung hält. Die Gummimuffe 40 hält also die Spannschraube 26 elastisch federnd in einer Stellung, in der die Spannschraube 26 im Schlitz 28 im einen Spannflansch 22 einliegt.

Stößt, wie in Figur 2 dargestellt, beim Schließen der Rohrschelle der eine, den Schlitz 28 aufweisende Spannflansch 22 an den Kopf 30 der Spannschraube 26, wird der Kopf 30 gegen die Federkraft oder Elastizität der Gummi-muffe 40 in Pfeilrichtung radial nach außen verschwenkt. Die Gummimuffe 40 wird beim Verschwenken der Spannschraube 26 elastisch verformt.

Die Spannschraube 26 wird, wie in Figur 3 dargestellt, soweit radial nach außen verschwenkt, bis sich ihr Kopf 30 an einem äußeren Rand des einen, den Schlitz 28 aufweisenden Spannflansches 22 befindet. Werden beim Schließen der Rohrschelle die beiden Spannflansche 22, 24 weiter zusammengedrückt, gelangt der eine, den Schlitz 28 aufweisende Spannflansch 22 unter den Kopf 30 der Spannschraube 26, d. h. der Kopf 30 hat den einen Spannflansch 22 überwunden. Aufgrund ihrer Elastizität übt die durch das Verschwenken der Spannschraube 26 elastisch verformte Gummimuffe 40 eine Rückstellkraft bzw. ein Rückstellmoment auf die Spannschraube 26 aus, das die Spannschraube 26 zurück in ihre zum anderen Spannflansch 24 senkrechte Stellung verschwenkt. Dabei wird die Spannschraube 26 in den Schlitz 28 im einen Spannflansch 22 hineinverschwenkt, wie in Figur 4 dargestellt, so daß der Kopf 30 der Spannschraube 26 den einen Spannflansch 22 hintergreift und die Rohrschelle provisorisch geschlossen ist. Die Rohrschelle hält ein in sie eingelegtes Rohr, es muß lediglich noch die Spannschraube 26 angezogen werden, um das Rohr festzuspannen. Bei der in Figuren 2 bis 4 dargestellten Ausgestaltung einer erfindungsgemäßen Rohrschelle gelangt also die Spannschraube 26 beim Schließen der Rohrschelle selbsttätig aufgrund der Elastizität bzw. Federkraft der Gummimuffe 40 in den Schlitz 28 im einen Spannflansch 22. Die Spannschraube 26 braucht nicht von Hand in den Schlitz 28 hineinverschwenkt werden, wodurch das Schließen der Rohrschelle weiter vereinfacht ist.

## Patentansprüche

1. Rohrschelle (10) mit einem Schellenring, der ein in die Rohrschelle (10) Rohr umgreift und der eine Öffnung (16) zum Einlegen des einlegbares Rohres an einer Stelle seines Umfangs aufweist, wobei der Schellenring zwei in etwa radial nach außen stehende Spannflansche (22, 24) beiderseits der Öffnung (16) aufweist, die mit einer sie durchgreifenden Spannschraube (26) zusammenspannbar sind, wobei einer der beiden Spannflansche (22, 24), der sich auf der Seite eines Kopfes (30) der Spannschraube (26) befindet, einen einseitig offenen Schlitz und der andere Spannflansch (22, 24) ein Gewindeloch (34) aufweist, und wobei die Spannschraube (26) einen gewindefreien Schaftabschnitt (32) mit Abstand vom Kopf (30) der Spannschraube (26) aufweist, der, wenn er sich im Gewindeloch (34) des anderen Spannflansches (24) befindet, ein Verschwenken der Spannschraube (26) aus dem Schlitz (28) des einen Spannflansches (22) heraus und in den Schlitz (28) hinein ermöglicht, und wobei die Spannschraube (26) eine Verliersicherung (36; 40) auf einer dem Kopf (30) der Spannschraube (26) abgewandten Seite des gewindefreien Schaftabschnitts (32) aufweist, **dadurch gekennzeichnet, dass** die Spannschraube (26) einen Gummischlauch, einen Kunststoffschlauch, einen Gummiring, einen Kunststoffring, eine Tellerfeder oder eine Schraubendruckfeder als Federelement (40) aufweist, das die Verliersicherung bildet und das sich an dem anderen, das Gewindeloch (34) aufweisenden Spannflansch (24) abstützt und die Spannschraube (26) federnd in einer Stellung hält, in der sie im Schlitz (28) des einen Spannflansches (22) einliegt, wenn sich die Spannschraube (26) mit ihrem gewindefreien Schaftabschnitt (32) im Gewindeloch (34) des anderen Spannflansches (24) befindet.

2. Rohrschelle nach Anspruch 1, **dadurch gekennzeichnet, daß** der eine, den Schlitz (28) aufweisende Spannflansch (22) einen Abweiser (38) aufweist, der vom anderen, das Gewindeloch (34) aufweisenden Spannflansch (24) weg verläuft, gegen den der Kopf (30) der Spannschraube (26) gelangt, wenn die beiden Spannflansche (22, 24) zum Schließen der geöffneten Rohrschelle (10) zusammengedrückt werden und der den Kopf (30) der Spannschraube (26) in Richtung des offenen Endes des Schlitzes (28) im einen Spannflansch (22) drückt.

3. Rohrschelle nach Anspruch 1, **dadurch gekennzeichnet, daß** der Schellenring zwei Schellenbügel (12, 14) aufweist, die gelenkig miteinander verbunden sind.

4. Rohrschelle nach Anspruch 1, **dadurch gekennzeichnet, daß** der Schellenring (12, 14) eine Befestigungseinrichtung (20) zum Anbringen an einer Wand, Decke oder dgl. aufweist.

## Claims

1. Pipe clip (10) having a clip ring, which engages around a pipe insertable into the pipe clip (10) and which has at a point on its circumference an opening (16) for insertion of the pipe, the clip ring having two clamping flanges (22, 24) that project approximately radially outwards on both sides of the opening (16), which clamping flanges (22, 24) are arranged to be clamped together by means of a clamping screw (26) that passes through them, the first of the two clamping flanges (22, 24), which is located beside a head (30) of the clamping screw (26), having a slot open to one side and the second clamping flange (22, 24) having a threaded hole (34), and the clamping screw (26) having an unthreaded shank portion (32) remote from the head (30) of the clamping screw (26) which, when it is located in the threaded hole (34) of the second clamping flange (24), enables the clamping screw (26) to pivot out of the slot (28) in the first clamping flange (22) and into the slot (28), and the clamping screw (26) having an anti-loss arrangement (36; 40) on that side of the unthreaded shank portion (32) which is remote from the head (30) of the clamping screw (26), **characterised in that** the clamping screw (26) has a rubber tube, a plastics tube, a rubber ring, a plastics ring, a cup screw or a helical compression spring as a resilient element (40), which forms the anti-loss arrangement and which bears against the second clamping flange (24), which has the threaded hole (34), and resiliently holds the clamping screw (26) in a position in which it is located in the slot (28) of the first clamping flange (22), when the clamping screw (26) is located with its unthreaded shank portion (32) in the threaded hole (34) of the second clamping flange (24).

2. Pipe clip according to claim 1, **characterised in that** the first clamping flange (22), which has the slot (28), has a deflector (38), which extends away from the second clamping flange (24), which has the threaded hole (34), which deflector (38) comes into contact with the head (30) of the clamping screw (26) when the two clamping flanges (22, 24) are being pressed together for closing the opened pipe clip (10) and presses the head (30) of the clamping screw (26) towards the open end of the slot (28) in the first clamping flange (22).

3. Pipe clip according to claim 1, **characterised in that** the clip ring comprises two clip members (12, 14), which have an articulated connection to one another.

4. Pipe clip according to claim 1, **characterised in that** the clip ring (12, 14) has a fastening device (20) for attachment to a wall, ceiling or the like.

## Revendications

1. Collier de serrage pour tuyau (10) avec une bague de collier qui entoure un tuyau pouvant être introduit dans le collier de serrage (10) et qui comporte à un endroit de sa circonférence une ouverture (16) pour introduire le tuyau, la bague de collier comportant deux brides de serrage (22, 24) qui s'étendent sensiblement radialement vers l'extérieur des deux côtés de l'ouverture (16) et qui peuvent être serrées l'une contre l'autre avec une vis de serrage (26) qui les traverse, l'une des deux brides de serrage (22, 24) qui se trouve du côté d'une tête (30) de la vis de serrage (26) comportant une fente ouverte d'un seul côté et l'autre bride de serrage (22, 24) comportant un trou taraudé (34), et la vis de serrage (26) comportant une section de fût sans filetage (32) à une certaine distance de la tête (30) de la vis de serrage (26) qui, lorsqu'elle se trouve dans le trou taraudé (34) de l'autre bride de serrage (24), permet de faire pivoter la vis de serrage (26) à l'extérieur de la fente (28) de l'une des brides de serrage (22) et à l'intérieur de la fente (28) et la vis de serrage (26) comportant un dispositif d'imperdabilité (36 ; 40) sur un côté de la section de fût sans filetage (32) à l'opposé de la tête (30) de la vis de serrage (26), **caractérisé en ce que** la vis de serrage (26) comporte un tuyau en caoutchouc, un tuyau en matière plastique, une bague en caoutchouc, une bague en matière plastique, une rondelle ressort ou un ressort de compression cylindrique en tant qu'élément élastique (40) qui forme le dispositif d'imperdabilité et qui s'appuie sur l'autre bride de serrage (24) comportant le trou taraudé (34) et maintient la vis de serrage (26) élastiquement dans une position dans laquelle elle se trouve à l'intérieur de la fente (28) de l'une des brides de serrage (22) lorsque la vis de serrage (26) avec sa section de fût sans filetage (32) se trouve dans le trou taraudé (34) de l'autre bride de serrage (24).

2. Collier de serrage pour tuyau selon la revendication 1, **caractérisé en ce que** ladite une bride de serrage (22) comprenant la fente (28) comporte un bec (38) qui s'étend depuis l'autre bride de serrage (24) comportant le trou taraudé (34), vient en butée contre la tête (30) de la vis de serrage (26) lorsque les deux brides de serrage (22, 24) sont pressées l'une contre l'autre pour fermer le collier de serrage (10) ouvert et qui comprime la tête (30) de la vis de serrage (26) en direction de l'extrémité ouverte de la fente (28) dans une bride de serrage (22).

3. Collier de serrage pour tuyau selon la revendication 1, **caractérisé en ce que** la bague de collier comporte deux étriers de collier (12, 14) qui sont reliés l'un à l'autre de manière articulée.

4. Collier de serrage pour tuyau selon la revendication 1, **caractérisé en ce que** la bague de collier (12, 14) comporte un dispositif de fixation (20) pour le montage sur un mur, un plafond ou similaire.
